# EUROPEAN PATENT APPLICATION

(11) **EP 2 899 291 A1**
(43) Date of publication of application: **29.07.2015**
(21) Application number: 14194568.3
(22) Date of filing: 24.11.2014
(51) Int. Cl.: C23C 4/02, F01D 5/00

(54) **Selective localized coating deposition methods and systems for turbine components**

(30) Priority: 04.12.2013 US 201314096087
(71) Applicant: General Electric Company, Schenectady, New York 12345 (US)
(72) Inventor: Ward, JR., John David, Greenville, SC 29615 (US); Hardwicke, Canan Uslu, Greenville, SC 29615 (US); Lomas, Jonathan Matthew, Greenville, SC 29615 (US); Eminoglu, Cem Murat, Greenville, SC 29615 (US); Reid, Thomas Robert, Greenville, SC 29615 (US)
(74) Representative: Cleary, Fidelma

(57) **Abstract**

Methods for selective localized coating deposition for a turbine component 20 include providing the turbine component comprising an exterior surface 22 with one or more surface features 25 and selectively coating at least a portion of the exterior surface using a localized coating deposition apparatus 50 based on a location of at least one of the one or more surface features.

## Description

### BACKGROUND OF THE INVENTION

The subject matter disclosed herein relates to coating turbine components and, more specifically, to selective localized coating deposition methods and systems for turbine components.

In gas turbine engines, such as aircraft engines for example, air is drawn into the front of the engine, compressed by a shaft-mounted rotary-type compressor, and mixed with fuel. The mixture is burned, and the hot exhaust gases are passed through a turbine mounted on a shaft. The flow of gas turns the turbine, which turns the shaft and drives the compressor and fan. The hot exhaust gases flow from the back of the engine, driving it and the aircraft forward.

During operation of gas turbine engines, the temperatures of combustion gases may exceed 3,000°F, considerably higher than the melting temperatures of the metal parts of the engine which are in contact with these gases. Operation of these engines at gas temperatures that are above the metal part melting temperatures may depend in part one or more protective coatings and/or on supplying a cooling air to the outer surfaces of the metal parts through various methods. The metal parts of these engines that are particularly subject to high temperatures, and thus require particular attention with respect to cooling, are the metal parts forming combustors and parts located aft of the combustor.

For example metal temperatures can be maintained below melting levels by using passageways such as fluid flow exit passages (e.g., cooling holes) incorporated into some engine components. Sometimes, thermal barrier coatings (TBCs) may also be applied to the component by a coating process (e.g., a thermal spray process). However, the thermal spray process and other cleaning processes (e.g., grit blasting, shot peening, water jet washing) may result in overspray that partially or completely blocks the component's fluid flow exit passages thereby requiring additional post-coating labor.

As a result, some coating and cleaning processes involve a multi-step, labor intensive process of applying a partial layer of coating, allowing the component and the coating to sufficiently cool to a temperature at which the component can easily be handled, removing the component from an application fixture on which the thermal spraying takes place, and removing any masking, which is then followed by separately removing the well-cooled, solidified coating from the fluid flow exit passages using a water jet or other cleaning methods. To prevent the fluid flow exit passages from becoming obstructed beyond a level from which they can be satisfactorily cleaned, only a fraction of the desired coating thickness may be applied prior to cleaning. As a result, the entire process may need to be repeated several times until the desired coating thickness is reached. This complex process may result in low productivity, high cycle time, and increases costs by a factor of five to ten times that of applying the same coating to a similar non-holed part.

Accordingly, alternative selective localized coating deposition methods and systems would be welcome in the art.

### BRIEF DESCRIPTION OF THE INVENTION

In one embodiment, a method is disclosed for selective localized coating deposition for a turbine component. The method includes providing the turbine component comprising an exterior surface with one or more surface features and selectively coating at least a portion of the exterior surface using a localized coating deposition apparatus based on a location of at least one of the one or more surface features.

In another embodiment, a selective localized coating deposition system is disclosed. The selective localized coating deposition system includes a coating feedstock and a localized coating deposition apparatus that applies a coating using the coating feedstock. The selective localized coating deposition system further includes a controller that controls the localized coating deposition apparatus to selectively coat at least a portion of an exterior surface of a turbine component based on a location of at least one of one or more surface features.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary schematic of a selective localized coating deposition system coating a turbine component according to one or more embodiments shown or described herein;
FIG. 2 is an exemplary schematic of a potential coating configuration using a selective localized coating deposition system according to one or more embodiments shown or described herein;
FIG. 3 is an exemplary schematic of another potential coating configuration using a selective localized coating deposition system according to one or more embodiments shown or described herein;
FIG. 4 is an exemplary schematic of yet another potential coating configuration using a selective localized coating deposition system according to one or more embodiments shown or described herein; and,

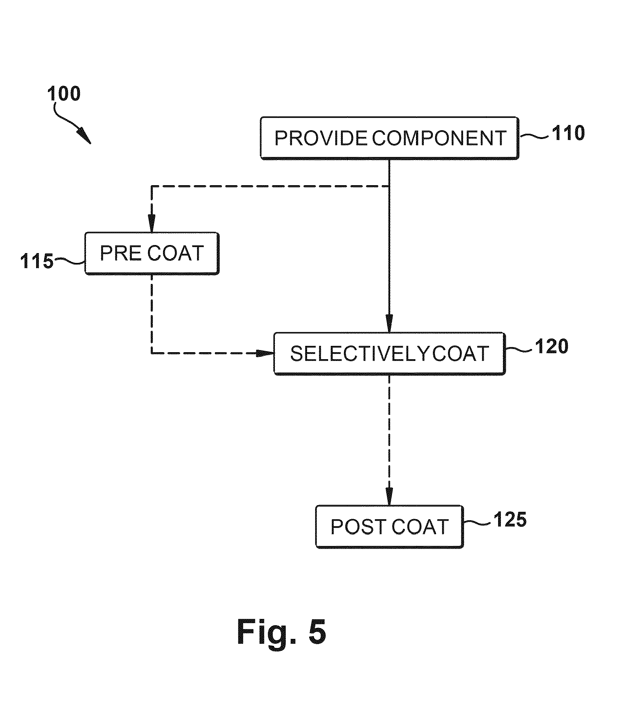

FIG. 5 illustrates an exemplary method for selective localized coating deposition using a selective localized coating deposition system according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Selective localized coating deposition methods and systems as disclosed herein may be utilized to selectively coat at least a portion of the exterior surface of a turbine component while accommodating one or more surface features. Specifically, a localized coating deposition apparatus may be able to coat using a small and precise enough effective deposition area that it can navigate the one or more surface features during coating. By coating turbine components using such localized coating deposition apparatuses, the amount of prep work and finish work may be reduced. Specifically, surface features (e.g., fluid flow exit passages, contours, and the like) that may cause additional work when utilizing broad coating techniques that coat entire surfaces with no or minimal discretion, may be accounted for and uniquely handled during the coating process.

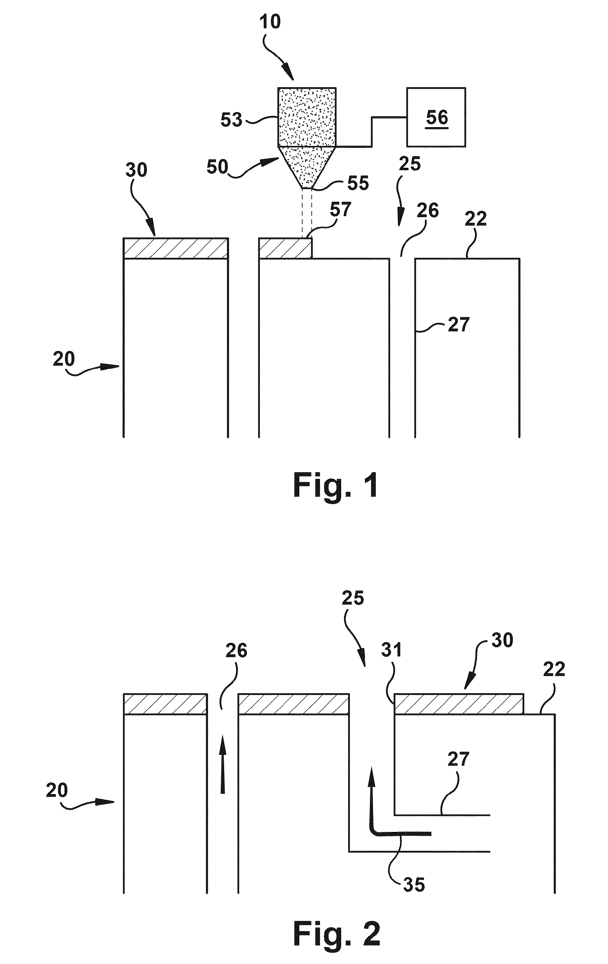

Referring now to FIG. 1, a selective localized coating deposition system 10 is illustrated. The selective localized coating deposition system 10 generally comprises a coating feedstock 53, a localized coating deposition apparatus 50 and a controller 56 that can combine to selectively coat a portion of a turbine component 20.

The turbine component 20 may comprise any component of a turbine that will have one or more coatings 30 on its exterior surface 22. For example, the turbine component 20 may comprise a combustion component or other hot gas path component. In some embodiments, the turbine component 20 may comprise a liner, bucket, blade, vane, nozzle, shroud, rotor, or transition piece. In other embodiments, the turbine component 20 may comprise any other component of a turbine such as a component for a gas turbine, industrial gas turbine, steam turbine or the like such as components comprising nickel or cobalt based superalloys. In some particular embodiments, the coating may be used on a turbine component for a near flow path seal.

The turbine component 20 as disclosed herein for use in the selective localized coating deposition system 10 comprises an exterior surface 22 with one or more surface features 25. As used herein, "surface feature" 25 refers to any point of nonuniformity along the exterior surface 22 that requires unique coating considerations. For example, in some embodiments, surface features 25 may include one or more fluid flow exit passages 26 (e.g., cooling holes) that may potentially clog if coated over using conventional techniques.

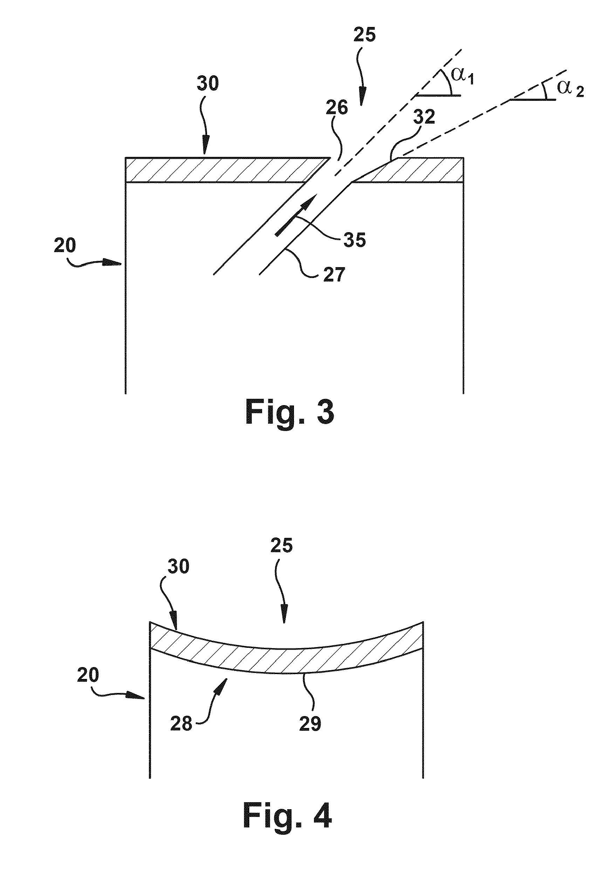

In some embodiments, surface features 25 may comprise one or more contours 28 (i.e., non-flat surfaces). For example, a concave contour surface (as illustrated in FIG. 4) may require selective coating to avoid excessive coating building up in the base 29 (i.e., bottom point) of the contour 28 that would result in non-uniform coating thickness across the exterior surface 22.

In some embodiments, surface features 25 may comprise a local void in coating relative to the surrounding area (e.g., an area on the exterior surface 22 that had a portion of its preexisting coating removed, such as by choice or result of spallation during operation). For example, the local surface feature may comprise a gap between two adjacent coating areas (e.g., a preexisting one and a new one) such that the selective localized coating deposition system 10 may selectively coat to bridge the gap. Additionally or alternatively, in such embodiments, the selective localized coating deposition system 10 may thereby replace/repair the missing coating on the exterior surface 22 without having to strip and recoat the entire turbine component 20.

In even some embodiments, the surface feature 25 may comprise an abradable pattern in the coating 30 itself For example, the selective localized coating deposition system 10 may perform one or more passes to build up a patterned coating such as for abradable patterned coatings for shroud tiles.

Still referring to FIG. 1, the selective localized coating deposition system 10 comprises the localized coating deposition apparatus 50 and the coating feedstock 53. The localized coating deposition apparatus 50 can comprise any machine or device that can selectively coat a portion of the exterior surface 22 of the turbine component 20 with a coating 30 from the coating feedstock 53 with a precise enough effective deposition area 57 to accommodate one or more surface features 25 as should be appreciated herein. For example, the localized coating deposition apparatus 50 may generally comprise a distribution tip 55 that deposits the coating feedstock 53. The coating 30 from the coating feedstock 53 may thereby exit the distribution tip 55 and deposit onto the exterior surface 22 of the turbine component 20 within an effective deposition area 57. The effective deposition area 57 refers to the size of the area that localized coating deposition apparatus 50 can effectively deposit the coating 30. The effective deposition area 57 should be small and precise enough to allow for selective localized coating around the one or more surface features 25 as should be appreciated herein (e.g., around a fluid flow exit passage 26). For example, in some embodiments the effective deposition area 57 may be less than or equal to about 0.75 in², less than or equal to about 0.5 in², or even less than or equal to about 0.1 in².

For example, in some embodiments, the localized coating deposition apparatus 50 may comprise an aerosol jet coater, a micro plasma coater or the like. In some particular embodiments, the localized coating deposition apparatus may comprise commercially available Micro Dispensing Machines (Micropen or 3Dn) from Ohcraft, Inc. or nScrypt, Inc., Aerosol Jen and LENS systems from Optomec, Inc., MesoPlasma from MesoScribe Technologies, Inc., or combinations thereof.

The localized coating deposition system 10 further comprises a controller 56 (e.g., any computing device that can execute a code, algorithm or the like to control the localized coating deposition apparatus 50) coupled to the localized coating deposition apparatus 50 that controls one or more selective coating parameters (e.g., coating rates, coating locations, apparatus movement, turbine component movement, etc.). A CAD or similar model of the turbine component 20 may be uploaded to the localized coating deposition apparatus 50 (e.g., into the controller 56) identifying the one or more surface features 25. The localized coating deposition apparatus 50 may thereby coat and accommodate those surface features based on the CAD specification. Alternatively or additionally, the localized coating deposition apparatus 50 may comprise an active locating system such as by scanning the turbine component 20 before or during the coating operation that is subsequently used to determine where to selectively coat. Such scanning may include, for example, blue light type optical systems and/or passing a physical contact along the exterior surface 22. The localized coating deposition system 10 may thereby coat at least a portion of the exterior surface 22 of the turbine component 20 using any suitable locating system as should be appreciated to those skilled in the art.

The determination of where to selectively coat using the localized coating deposition apparatus 50 may be determined by one or more individuals/operators, one or more controllers 56 and/or any other suitable technique or combinations thereof. Furthermore, where to selectively coat may be based on one or predetermined logic-based rules, determined on a case-by-case basis accounting for each unique parameter, or combinations thereof.

The coating 30 selectively deposited by the localized coating deposition apparatus 50 may comprise a variety of types of coatings to facilitate the protection of the underlying turbine component 20. For example, the coating 30 may comprise a thermal barrier coating, clearance coating, and/or wear resistant coating. In some embodiments, the coating 30 may comprise a bond coat that is used for a subsequent thermal barrier coating or oxidation resistant metallic coating. In even some embodiments, such as when the turbine component comprises a ceramic matrix composite (CMC), the coating 30 may comprise an environmental barrier coating (EBC).

It should be appreciated that the type of coating 30 may be at least partially selected based on the localized coating deposition apparatus 50. For example, the coating feedstock 53 must comprise the requisite particle size distribution to facilitate coating through a distribution tip 55 or the like and be deposited with an effective deposition area 57 that can accommodate the one or more surface features 25.

Referring now additionally to FIGS. 2-4, the coating 30 may be selectively deposited (i.e., coated) by the localized coating deposition apparatus 50 in a variety of configurations that accommodate for the one or more surface features 25 on the exterior surface 22 of the turbine component 20. As used herein, selectively coating to accommodate the location of one or more surface features refers to coating one or more portions of the exterior surface 22 around the surface feature 25 so as to mitigate or avoid interference with the surface feature 25 by the coating 30. This can include avoiding coating over the surface feature 25 itself (e.g., not coating within a fluid flow exit passage 26), coating a thicker or thinner layer as you approach the surface feature 25 (e.g., coating a thinner layer towards the base 29 of a contour 28 to accommodate potential overflow collection from coating adjacent areas), and/or coating symmetrical or nonsymmetrical designs at or near the surface feature 25 (e.g., coating ridges, bumps or other designs around a fluid flow exit passage 26 or along an abradable surface).

For example, with reference to FIGS. 1-3, in some embodiments the surface feature 25 can comprise a fluid flow exit passage 26 (e.g., cooling hole) as discussed herein. In such embodiments, the coating 30 may be selectively deposited around the fluid flow exit passage 26 such that the coating 30 does not significantly enter the fluid flow exit passage 26 or connected fluid flow internal channel 27 (e.g., cooling channel or feed channel). This may prevent clogging of the fluid flow exit passage 26 by excess coating 30 that would require additional processing steps to remove the blocking debris. In particular, such selective coating utilization may better enable the coating of turbine components 20 that comprise a fluid flow internal channel 27 non-parallel with the fluid flow exit passage 26 (e.g., perpendicular as illustrated in FIG. 2) such that the access to the fluid flow internal channel 27 would be difficult to remove any blockages.

In some of these embodiments, the localized coating deposition apparatus 50 may selectively coat around the fluid flow exit passage 26 in a straight wall 31 configuration (i.e., wherein a straight wall 31 of the coating 30 matches the straight wall of the fluid flow exit passage 26). In other embodiments, the localized coating deposition apparatus 50 may selectively coat around the fluid flow exit passage 26 in a tapered wall 32 configuration to assist in diffusing the cooling air exiting the fluid flow exit passage 26. For example, as illustrated in FIG. 3, the fluid flow exit passage 26 may exit the turbine component 20 at a first angle α₁. The tapered wall 32 of the coating 30 may exit the turbine component 20 at a second angle α₂ (or have a curved surface providing a plurality of angles) that is different than the first angle α₁. Such embodiments may promote the formation of a film of air flow 35 along the exterior surface 22 of the turbine component 20 as it exits the fluid flow exit passage 26.

With reference to FIG. 4, in some embodiments the surface feature 25 may comprise a contour 28. As discussed above, the contour 28 may comprise any non-flat surface wherein the coating 30 may have a propensity to collect in excess at select locations due to the configuration of the contour 28. In such embodiments, the localized coating deposition apparatus 50 may selectively coat the contour 28 by depositing different amounts of coating 30 (i.e., different levels of thicknesses) at different locations along the exterior surface 22 based at least in part on the location of the contour 28. For example, since the base 29 of the contour 28 may be subject to higher coating 30 buildup due to its lower placement, the localized coating deposition apparatus 50 may deposit a thinner amount of coating 30 at the base 29 than higher along the contour 28 since at least some of the coating 30 deposited higher along the contour 28 will travel and collect towards the base 29 itself. Such selective coating may thereby produce a coating 30 along the contour 28 of more uniform thickness.

In some embodiments, the turbine component 20 may comprise one or more additional coatings 30 (e.g., multiple layers of coatings 30 or different coatings 30 at different locations). In such embodiments, the additional coatings 30 may comprise the same or different materials and may all be deposited using the localized coating deposition apparatus 50 or only some may be deposited using the localized coating deposition apparatus 50.

For example, the turbine component 20 may be coated with both a bond coat and a thermal barrier coating, both of which or only one of which may be deposited using the localized coating deposition apparatus. In other embodiments, the turbine component 20 may have one or more top coatings deposited on top of a thermal barrier coating or environmental barrier coating, which may or may not be deposited using the localized coating deposition apparatus 50.

The utilization of the localized coating deposition apparatus for additional coatings may depend on how the other coatings are selectively deposited. For example, if a first coating 30 is selectively deposited around a fluid flow exit passage 26, an additional coating (not illustrated) may be deposited using another technique that does not contain the same level of precision. Since the first coating was selectively deposited around the fluid flow exit passage 26, the second coating may be more broadly applied to the remaining area(s) between the fluid flow exit passages 26 without as much of a risk of getting coating material within the fluid flow exit passage 26.

Referring now additionally to FIG. 6, a method 100 is illustrated for selective localized coating deposition for a turbine component 20. The method 100 first comprises providing the turbine component 20 in step 110. As discussed above, the turbine component 20 can comprise any turbine component 20 that is to receive a coating 30 and has an exterior surface 22 with one or more surface features 25. The turbine component 20 can comprise a new make component or a used component provided for modification (e.g., coating replacement).

The method 100 further comprises selectively coating at least a portion of the exterior surface 22 in step 110 using a localized coating deposition apparatus 50 that can accommodate a location of the one or more surface features 25 while coating. For example, the localized coating deposition apparatus 50 can selectively coat around a fluid flow exit passage 26, selectively coat different configurations around a fluid flow exit passage 26, selectively coat different levels of thickness at a contour 28 or otherwise selectively coat to accommodate the location of the one or more surface features 25 as should be appreciated herein.

In some embodiments, the method 100 may optionally comprise one or more additional coating steps 115 and 125 which may or may not be deposited using the localized coating deposition apparatus 50. For example, in some embodiments, the turbine component 20 may be pre-coated in step 115. Pre-coating in step 115 may comprise coating at least a portion of the turbine component 20 before selectively coating at least a portion in step 120. The optional pre-coat in step 115 may comprise any type of initial coating as discussed herein (e.g., bondcoat) and may also optionally be selectively coated using the same or similar localized coating deposition apparatus 50.

Likewise, in some embodiments, the method 100 may comprise one or more post coating applications in step 125 following the selective coating in step 120. The optional post coating in step 125 may comprise any type of final coating as discussed herein and may also optionally be selectively coated using the same or similar localized coating deposition apparatus 50.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method for selective localized coating deposition for a turbine component, the method comprising:
   providing the turbine component comprising an exterior surface with one or more surface features;
   selectively coating at least a portion of the exterior surface using a localized coating deposition apparatus based on a location of at least one of the one or more surface features.
2. The method of clause 1, wherein the at least one of the one or more surface features comprises a fluid flow exit passage.
3. The method of any preceding clause, wherein selectively coating comprises coating at least one tapered wall around the fluid flow exit passage.
4. The method of any preceding clause, wherein selectively coating comprises coating a straight wall around the fluid flow exit passage.
5. The method of any preceding clause, wherein the fluid flow exit passage is connected to a fluid flow internal channel, and wherein the fluid flow exit passage and the fluid flow internal channel are non-parallel.
6. The method of any preceding clause, wherein the at least one of the one or more surface features comprises a contour.
7. The method of any preceding clause, wherein selectively coating comprises coating different levels of thicknesses based at least in part on the location of the contour.
8. The method of any preceding clause, wherein the coating comprises a bond coat, thermal barrier coating, environmental barrier coating, or wear resistant coating.
9. The method of any preceding clause, wherein the turbine component comprises a liner, bucket, blade, vane, nozzle, shroud, rotor, or transition piece.
10. The method of any preceding clause, further comprising applying one or more post-coatings to the exterior surface of the turbine component to form an abradable pattern.
11. The method of any preceding clause, wherein the at least one of the one or more surface features comprises a locally stripped coating area.
12. A selective localized coating deposition system comprising:
   a coating feedstock; and,
   a localized coating deposition apparatus that applies a coating using the coating feedstock; and,
   a controller that controls the localized coating deposition apparatus to selectively coat at least a portion of an exterior surface of a turbine component based on a location of at least one of one or more surface features.
13. The selective localized coating deposition system of any preceding clause, wherein the at least one of the one or more surface features comprises a fluid flow exit passage.
14. The selective localized coating deposition system of any preceding clause, wherein selectively coat comprises coating at least one tapered wall around the fluid flow exit passage.
15. The selective localized coating deposition system of any preceding clause, wherein selectively coat comprises coating a straight wall around the fluid flow exit passage.
16. The selective localized coating deposition system of any preceding clause, wherein the fluid flow exit passage is connected to a fluid flow internal channel, and wherein the fluid flow exit passage and the fluid flow internal channel are non-parallel.
17. The selective localized coating deposition system of any preceding clause, wherein the at least one of the one or more surface features comprises a contour.
18. The selective localized coating deposition system of any preceding clause, wherein selectively coat comprises coating different levels of thicknesses based at least in part on the location of the contour.
19. The selective localized coating deposition system of any preceding clause, wherein the coating comprises a bond coat, thermal barrier coating, environmental barrier coating or wear resistant coating.
20. The selective localized coating deposition system of any preceding clause, wherein the selective localized coating apparatus has an effective deposition area of less than or equal to about 0.75 in².

## Claims

1. A method for selective localized coating deposition for a turbine component (20), the method comprising:
providing the turbine component comprising an exterior surface (22) with one or more surface features (25);
selectively coating at least a portion of the exterior surface using a localized coating deposition apparatus (50) based on a location of at least one of the one or more surface features.

2. The method of claim 1, wherein the at least one of the one or more surface features (25) comprises a fluid flow exit passage (26).

3. The method of claim 2, wherein selectively coating comprises coating at least one tapered wall (32) around the fluid flow exit passage (26).

4. The method of claim 2 or 3, wherein selectively coating comprises coating a straight wall (31) around the fluid flow exit passage (26).

5. The method of claim 2, 3 or 3, wherein the fluid flow exit passage (26) is connected to a fluid flow internal channel (27), and wherein the fluid flow exit passage and the fluid flow internal channel are non-parallel.

6. The method of any preceding claim, wherein the at least one of the one or more surface features (25) comprises a contour.

7. The method of claim 6, wherein selectively coating comprises coating different levels of thicknesses based at least in part on the location of the contour.

8. The method of any preceding claim, further comprising applying one or more post-coatings to the exterior surface (22) of the turbine component to form an abradable pattern.

9. The method of claim 8, wherein the at least one of the one or more surface features comprises a locally stripped coating area.

10. A selective localized coating deposition system comprising:
a coating feedstock (53); and,
a localized coating deposition apparatus (50) that applies a coating using the coating feedstock; and,
a controller (56) that controls the localized coating deposition apparatus to selectively coat at least a portion of an exterior surface (22) of a turbine component (20) based on a location of at least one of one or more surface features (25).

11. The selective localized coating deposition system of claim 10, wherein the at least one of the one or more surface features (25) comprises a fluid flow exit passage (26).

12. The selective localized coating deposition system of claim 11, wherein selectively coat comprises coating at least one tapered wall (32) around the fluid flow exit passage (26).

13. The selective localized coating deposition system of claim 11 or 12, wherein selectively coat comprises coating a straight wall (31) around the fluid flow exit passage (26).

14. The selective localized coating deposition system of any of claims 11 to 13, wherein the fluid flow exit passage (26) is connected to a fluid flow internal channel (27), and wherein the fluid flow exit passage and the fluid flow internal channel are non-parallel.

15. The selective localized coating deposition system of any of claims 10 to 14, wherein the at least one of the one or more surface features (25) comprises a contour.
